# EUROPÄISCHE PATENTSCHRIFT

(11) **EP 3 869 654 B1**
(45) Veröffentlichungstag und Bekanntmachung des Hinweises auf die Patenterteilung: **12.11.2025**
(21) Anmeldenummer: 21157007.2
(22) Anmeldetag: 14.02.2021
(51) Int. Cl.: H02J 3/28, H02J 3/46, H02J 3/38

(54) **VERFAHREN ZUM BETREIBEN EINES ELEKTRISCHEN INSELSTROMNETZES**
METHOD FOR OPERATING A STAND-ALONE ELECTRICITY NETWORK
PROCÉDÉ DE FONCTIONNEMENT D'UN RÉSEAU ÉLECTRIQUE INSULAIRE

(30) Priorität: 19.02.2020 DE 102020104324
(43) Veröffentlichungstag der Anmeldung: 25.08.2021
(73) Patentinhaber: Everllence SE, 86153 Augsburg (DE); Fraunhofer-Gesellschaft zur Förderung der angewandten Forschung e.V., 80686 München (DE)
(72) Erfinder: Raila, Michael, 86675 Buchdorf (DE); Berger, Stephan, 86159 Augsburg (DE); Olenberger, Christian, 53757 Sankt Augustin (DE); Häckel, Björn, 53757 Sankt Augustin (DE)

(56) Entgegenhaltungen:
- WO-A1-2016/109330
- DE-A1- 102015 101 738
- DE-B4- 102015 101 738
- US-A1- 2014 103 727
- US-A1- 2015 039 145
- US-A1- 2016 077 507

## Beschreibung

Die Erfindung betrifft ein Verfahren zum Betreiben eines elektrischen Inselstromnetzes.

Bei einem elektrischen Inselstromnetz handelt es sich um ein lokal begrenztes Stromnetz, welches auf erneuerbaren Energieträgern, wie Wind und Sonne, beruhende Energieerzeugungsanlagen, auf konventionellen Energieträgern, wie fossilen Brennstoffen, beruhende Energieerzeugungsanlagen, Energiespeicher und Energieverbraucher aufweist, wobei ein solches Inselnetz typischerweise ein räumlich eng begrenztes Gebiet mit elektrischem Strom versorgt und keinen direkten elektrischen Anschluss zu anderen Stromnetzen besitzt. Grundsätzlich besteht Bedarf daran, ein solches Inselstromnetz sowohl netzstabil als auch kostenoptimal zu betreiben. Ein elektrisches Inselstromnetz wird auch als Microgrid bezeichnet.

Aus der EP 1 323 222 B1 ist ein Verfahren zum Betreiben eines elektrischen Inselstromnetzes bekannt, welches als auf erneuerbaren Energieträgern beruhende Energieerzeugungsanlagen ein Windrad und als auf konventionellen Energieträgern beruhende Energieerzeugungsanlagen einen Verbrennungsmotor umfasst. Ferner ist ein elektrischer Zwischenspeicher vorhanden. Die Windenergieanlage wird so betrieben, dass dieselbe stets nur die benötigte elektrische Leistung erzeugt, wobei sich die benötigte elektrische Leistung aus dem Verbrauch der elektrischen Leistung im Netz sowie dem Leistungsbedarf zum Aufladen des Zwischenspeichers zusammensetzt. Der Verbrennungsmotor wird nur dann eingeschaltet, wenn die von der Windenergieanlage und/oder den Zwischenspeichern abgegebene Leistung einen vorgebbaren Schwellwert für einen vorgebbaren Zeitabschnitt unterschreitet.

Aus der EP 1 485 978 B1 ist ein weiteres Verfahren zum Betreiben eines elektrischen Inselstromnetzes bekannt, welches wiederum auf erneuerbaren Energieträgern beruhende Energieerzeugungsanlagen, nämlich Windenergieanlagen, aufweist. Die jeweilige Windenergieanlage wird derart betrieben, dass sie stets nur die benötigte elektrische Leistung erzeugt, falls der Verbrauch der elektrischen Leistung im Netz geringer ist als das elektrische Energieerzeugungsvermögen der Windenergieanlage.

Die EP 3 028 358 B1 offenbart ein weiteres Verfahren zum Betreiben eines elektrischen Inselstromnetzes. Das Inselstromnetz wird dabei derart betrieben, dass eine Kostenfunktion minimal ist. Hierdurch ist dann ein kostenoptimaler Betrieb eines elektrischen Inselstromnetzes möglich.

Weiterer relevanter Stand der Technik ist gegeben durch: US 2015/039145 A1 (YANG FANG [US] ET AL) 5. Februar 2015 (2015-02-05); sowie: WO 2016/109330 A1 (FLEXGEN POWER SYSTEMS INC [US]) 7. Juli 2016 (2016-07-07); sowie: US 2014/103727 A1 (TAIMELA PASI [US] ET AL) 17. April 2014 (2014-04-17); sowie: US 2016/077507 A1 (SHEBLE GERALD BERNARD [US]) 17. März 2016 (2016-03-17); sowie: DE 10 2015 101738 A1 (SMA SOLAR TECHNOLOGY AG [DE]) 11. August 2016 (2016-08-11); sowie: DE 10 2015 101738 B4 (SMA SOLAR TECHNOLOGY AG [DE]) 29. Mai 2019 (2019-05-29)

Es besteht Bedarf an einem neuartigen Verfahren zum Betreiben eines elektrischen Inselstromnetzes, welches sowohl einen netzstabilen Betrieb des Inselstromnetzes als auch einen kostenoptimalen Betrieb desselben ermöglicht.

Hiervon ausgehend liegt der Erfindung die Aufgabe zu Grunde, ein neuartiges Verfahren zum Betreiben eines elektrischen Inselstromnetzes zu schaffen.

Diese Aufgabe wird durch ein Verfahren zum Betreiben eines elektrischen Inselstromnetzes gemäß Anspruch 1 gelöst.

Beim erfindungsgemäßen Verfahren werden ereignisgesteuert, nämlich dann, wenn eine Frequenz des Inselstromnetzes und/oder eine Spannung des Inselstromnetzes außenhalb definierter Grenzen liegt, erste Betriebsparameter für das Inselstromnetz derart bestimmt, dass die Frequenz des Inselstromnetzes und die Spannung des Inselstromnetzes innerhalb der definierten Grenzen liegen.

Dann, wenn die Frequenz des Inselstromnetzes und die Spannung des Inselstromnetzes innerhalb der definierten Grenzen liegen, werden zeitgesteuert, nämlich nach Ablauf einer definierten Zeitspanne, zweite Betriebsparameter für das Inselstromnetz derart bestimmt, dass das Inselstromnetz kostenoptimal betrieben wird.

Nach Bestimmung der zweiten Betriebsparameter für den kostenoptimalen Betrieb des Inselstromnetzes wird überprüft, ob diese zweiten Betriebsparameter gewährleisten, dass die Frequenz des Inselstromnetzes und die Spannung des Inselstromnetzes nach wie vor innerhalb der definierten Grenzen liegen, wobei dann, wenn dies der Fall ist, die zweiten Betriebsparameter zum Betrieb des Inselstromnetzes verwendet werden, wobei dann hingegen, wenn dies nicht der Fall ist, die zweiten Betriebsparameter nicht zum Betrieb des Inselstromnetzes verwendet werden.

Mit dem erfindungsgemäßen Verfahren wird vorgeschlagen, ereignisgesteuert erste Betriebsparameter für das Inselstromnetz zu bestimmen, die einen netzstabilen Betrieb desselben ermöglichen, um die Frequenz und die Spannung des elektrischen Inselstromnetzes innerhalb definierter Grenzen zu halten. Diese Betriebsparameter werden immer dann neu bestimmt, wenn die Frequenz des Inselstromnetzes und/oder die Spannung desselben außerhalb der definierten Grenzen liegen.

Dann, wenn die Frequenz des Inselstromnetzes und die Spannung desselben innerhalb der definierten Grenzen liegen, wenn also ein netzstabiler Betrieb des elektrischen Inselstromnetzes vorliegt, werden zeitgesteuert die zweiten Betriebsparameter bestimmt, um das Inselstromnetz kostenoptimal zu betreiben. Diese zweiten Betriebsparameter werden immer nach Ablauf einer definierten Zeitspanne unter Berücksichtigung der jeweils aktuellen Betriebsbedingungen des Inselstromnetzes neu ermittelt.

Nach der Bestimmung der zweiten Betriebsparameter für den kostenoptimalen Betrieb wird überprüft, ob diese zweiten Betriebsparameter unter Berücksichtigung der nach der Ermittlung vorliegenden Betriebsbedingungen des Inselstromnetzes nach wie vor einen netzstabilen Betrieb desselben gewährleisten, ob als die Frequenz und die Spannung des Inselstromnetzes nach wie vor innerhalb der definierten Grenzen liegen. Nur dann, wenn dies der Fall ist, werden die zweiten Betriebsparameter zum Betrieb des Inselstromnetzes verwendet.

Ein netzstabiler Betrieb hat demnach Vorrang vor einem kostenoptimalen Betrieb. Auf diese Art und Weise lässt sich ein elektrisches Inselstromnetz besonders vorteilhaft, nämlich einerseits netzstabil und andererseits kostenoptimal, betreiben.

Nach einer vorteilhaften Weiterbildung werden die ersten Betriebsparameter zur Gewährleistung eines Ausgleichs zwischen einer angeforderten elektrischen Leistung und einer zur Verfügung stehenden elektrischen Leistung unter Priorisierung der Energieerzeugungsanlagen und Energiespeicher ermittelt, vorzugsweise derart, dass die angeforderte elektrische Leistung einen Wirkleistungsanteil und einen Blindleistungsanteil umfasst, dass zunächst sämtliche Leistungspotentiale der mindestens einen auf erneuerbaren Energieträgern beruhende Energieerzeugungsanlagen, dann Leistungspotentiale des mindestens einen Energiespeichers und falls erforderlich Leistungspotentiale der mindestens einen auf konventionellen Energieträgern beruhende Energieerzeugungsanlage zur Bereitstellung des Wirkleistungsanteils der angeforderten elektrischen Leistung genutzt werden, wobei dies zu einer bereitgestellten Blindleistung führt. Dann, wenn die so bereitgestellte Blindleistung vom Blindleistungsanteil der angeforderten elektrischen Leistung um mehr als einen Grenzwert abweicht, wird die bereitgestellte Blindleistung über Veränderung des Betriebs mindestens eines Energiespeichers so angepasst, dass die bereitgestellte Blindleistung vom Blindleistungsanteil der angeforderten elektrischen Leistung nicht um mehr als den Grenzwert abweicht, sodass dann die Frequenz des Inselstromnetzes und die Spannung des Inselstromnetzes innerhalb der definierter Grenzen liegen.

Diese Bestimmung der ersten Betriebsparameter nutzt heuristische Methoden und kann somit in Echtzeit zum Ausgleich von Angebot elektrischer Leistung und Nachfrage elektrischer Leistung im Inselstromnetz erfolgen. Bei der Ermittlung der ersten Betriebsparameter werden keine betriebswirtschaftlichen Faktoren mit einbezogen, es wird lediglich betrachtet, ob eine angeforderte elektrische Leistung hinsichtlich Wirkleistung und Blindleistung netzstabil bereitgestellt werden kann.

Nach einer vorteilhaften Weiterbildung werden die zweiten Betriebsparameter durch Optimierung einer Kostenfunktion ermittelt, vorzugsweise derart, dass bei der Optimierung die mindestens eine auf erneuerbaren Energieträgern beruhende Energieerzeugungsanlage immer maximal zur Bereitstellung der angeforderten elektrischen Leistung genutzt wird und bei der Kostenfunktion die Kosten der mindestens einen auf erneuerbaren Energieträgern beruhende Energieerzeugungsanlagen unberücksichtigt bleiben.

Zur Ermittlung der zweiten Betriebsparameter wird eine Kostenfunktion optimiert. Hierbei werden demnach betriebswirtschaftliche Faktoren berücksichtigt. Eine derartige Optimierung einer Kostenfunktion ist rechenintensiv und kann mehrere Minuten in Anspruch nehmen. Daher wird nach Ermittlung der zweiten Betriebsparameter überprüft, ob dieselben auch unter denjenigen Betriebsbedingungen, die nach Ermittlung der zweiten Betriebsparameter im Inselstromnetz vorliegen, einen netzstabilen Betrieb des elektrischen Inselstromnetzes gewährleisten.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung eines elektrischen Inselstromnetzes;
- Fig. 2: ein erstes Blockdiagramm zur Verdeutlichung des erfindungsgemäßen Verfahrens zum Betreiben eines elektrischen Inselstromnetzes;
- Fig. 3: ein zweites Blockdiagramm zur Verdeutlichung des erfindungsgemäßen Verfahrens zum Betreiben eines elektrischen Inselstromnetzes.

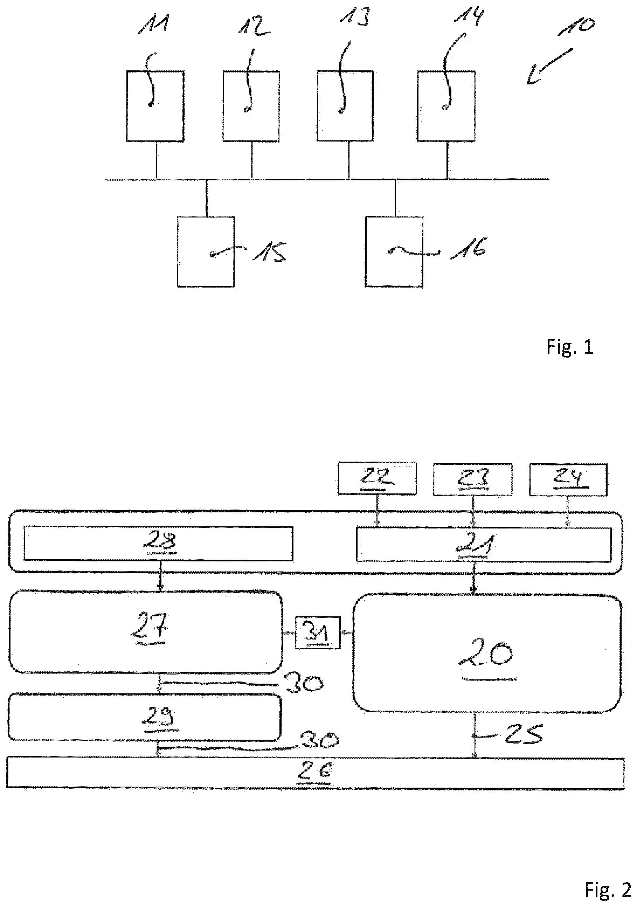

Fig. 1 zeigt stark schematisiert den Aufbau eines elektrischen Inselstromnetzes 10. Das elektrische Inselstromnetz 10 der Fig. 1 verfügt über mindestens eine Windenergieanlage 11, mindestens eine Solarenergieanlage 12, mindestens eine auf konventionellen Energieträgern beruhende Energieerzeugungsanlage 13 und über mindestens einen Energiespeicher 14.

Bei der Windenergieanlage 11 und der Solarenergieanlage 12 handelt es sich um auf erneuerbaren Energieträgern beruhende Energieerzeugungsanlagen. Bei der oder jeder auf konventionellen Energieträgern beruhenden Energieerzeugungsanlage 13 kann es sich um einen Verbrennungsmotor oder auch um eine Gasturbine handeln. Bei dem Energiespeicher 14 kann es sich um einen elektrischen Energiespeicher handeln.

Ferner verfügt das Inselstromnetz über Energieverbraucher, im gezeigten Ausführungsbeispiel über zwei Energieverbraucher 15, 16.

Um ein Inselstromnetz 10 optimal zu betreiben, werden ereignisgesteuert, nämlich dann, wenn eine Frequenz des Inselstromnetzes 10 und/oder eine Spannung des Inselstromnetzes 10 außerhalb definierter Grenzen liegt, erste Betriebsparameter für das Inselstromnetz 10 bestimmt, nämlich derart, dass die Frequenz des Inselstromnetzes 10 und die Spannung des Inselstromnetzes 10 innerhalb der definierten Grenzen liegen, dass also ein netzstabiler Betrieb des Inselstromnetzes 10 möglich ist.

In dem Blockschaltbild der Fig. 2 visualisiert ein Block 20 die Ermittlung der ersten Betriebsparameter für das Inselstromnetz 10, die gewährleisten, dass die Frequenz desselben und die Spannung desselben innerhalb definierter Grenzen liegen.

Wie oben bereits ausgeführt, erfolgt die Bestimmung der ersten Betriebsparameter ereignisgesteuert, nämlich immer dann, wenn im aktuellen Betrieb des Inselstromnetzes 10 die Frequenz desselben und/oder die Spannung desselben außerhalb der definierten Grenzen liegt, wenn das Inselstromnetz demnach den netzstabilen Betrieb verlässt. Um dies zu überprüfen, um also festzustellen, ob die Frequenz und/oder die Spannung des Inselstromnetzes außerhalb definierter Grenzen liegen, werden einem Block 21 der Fig. 2 Eingangsgrößen bereitgestellt, nämlich gemäß dem Block 22 eine Ist-Frequenz des Inselstromnetzes 10, gemäß dem Block 23 eine Ist-Spannung des Inselstromnetzes 10 und im Bedarfsfall gemäß dem Block 24 weitere Ist-Betriebsbedingungen des Inselstromnetzes 10.

In dem Block 21 wird überprüft, ob die Ist-Frequenz des Blocks 22 und die Ist-Spannung des Blocks 23 innerhalb definierter Grenzen liegen, ob also ein netzstabiler Betrieb des Inselstromnetzes 10 vorliegt. Ist dies der Fall, so wird ausgehend von Block 21 nicht auf Block 20 verzweigt, vielmehr kann das Inselstromnetz 10 dann unter den aktuellen Betriebsparametern weiter betrieben werden. Wird hingegen in Block 21 festgestellt, dass das Inselstromnetz 10 einen netzstabilen Betrieb verlässt, dass also die Frequenz und/oder die Spannung desselben außerhalb definierter Grenzen liegen, so wird ausgehend von Block 21 auf Block 20 verzweigt, wobei dann in Block 20 die ersten Betriebsparameter 25 bestimmt werden, um nachfolgend einen netzstabilen Betrieb des Inselstromnetzes 10 zu ermöglichen, wobei diese ersten Betriebsparameter 25 vom Block 20 als Ausgangsgrößen an eine Steuereinheit 26 übergeben werden, die dann das Inselstromnetz 10 auf Basis dieser ersten Betriebsparameter 25 des Blocks 20 betreibt, sodass dann die Frequenz und die Spannung desselben innerhalb der definierten Grenzen liegen.

Dann, wenn die Frequenz und die Spannung des elektrischen Inselstromnetzes 10 innerhalb der definierten Grenzen liegen, werden zeitgesteuert, nämlich immer nach Ablauf einer definierten Zeitspanne, zweite Betriebsparameter 30 für das Inselstromnetz 10 derart bestimmt, dass dasselbe kostenoptimal betrieben wird.

Die Ermittlung der zweiten Betriebsparameter 30 für das Inselstromnetz 10 zum kostenoptimalen Betrieb desselben erfolgt im Block 27 der Fig. 2. Ein Block 28 verdeutlicht die Zeitsteuerung, welche die Ermittlung der zweiten Betriebsparameter in Block 27 auslöst. Immer nach Ablauf einer definierten Zeitspanne, die in Block 28 überwacht wird, wird die Ermittlung der zweiten Betriebsparameter zum kostenoptimalen Betrieb des Inselstromnetzes in Block 27 ausgelöst.

Nach Bestimmung der zweiten Betriebsparameter 30 für den kostenoptimalen Betrieb des Inselstromnetzes 10 in Block 27 wird in einem Block 29 überprüft, ob diese zweiten Betriebsparameter 30 nach wie vor unter Berücksichtigung der nach Bestimmung der zweiten Betriebsparameter 30 gültigen Betriebsbedingungen des Inselstromnetzes einen netzstabilen Betrieb desselben gewährleisten, ob also die Frequenz des Inselstromnetzes 10 und die Spannung desselben unter Nutzung dieser zweiten Betriebsparameter 30 nach wie vor innerhalb der definierten Grenzen liegen.

Nur dann, wenn dies der Fall ist, werden die zweiten Betriebsparameter 30 dem Steuergerät 26 zur Verfügung gestellt, um auf Basis derer dann das Inselstromnetz zu betreiben.

Wird hingegen in Block 29 festgestellt, dass die zweiten Betriebsparameter 30 nach Bestimmung derselben unter Berücksichtigung der aktuellen Betriebsbedingungen keinen netzstabilen Betrieb des Inselstromnetzes gewährleisten, so werden dieselben verworfen, und das Inselstromnetz 10 wird auf Grundlage der ersten Betriebsparameter 25 weiter betrieben.

Ein Block 31 der Fig. 2 verdeutlicht eine Zeitverzögerung, und zwar derart, dass nach erneuter Bestimmung der ersten Betriebsparameter 25 in Block 20 infolge eines in Block 21 detektierten nicht netzstabilen Betriebs des Inselstromnetzes 10 eine definierte Zeitspanne abgewartet wird, bis in Block 27 die zweiten Betriebsparameter 30 zum kostenoptimalen Betrieb des Inselstromnetzes 10 bestimmt werden. Ist demnach die Zeitverzögerung des Blocks 31 noch aktiv, so wird die Zeitsteuerung des Blocks 28 unterdrückt.

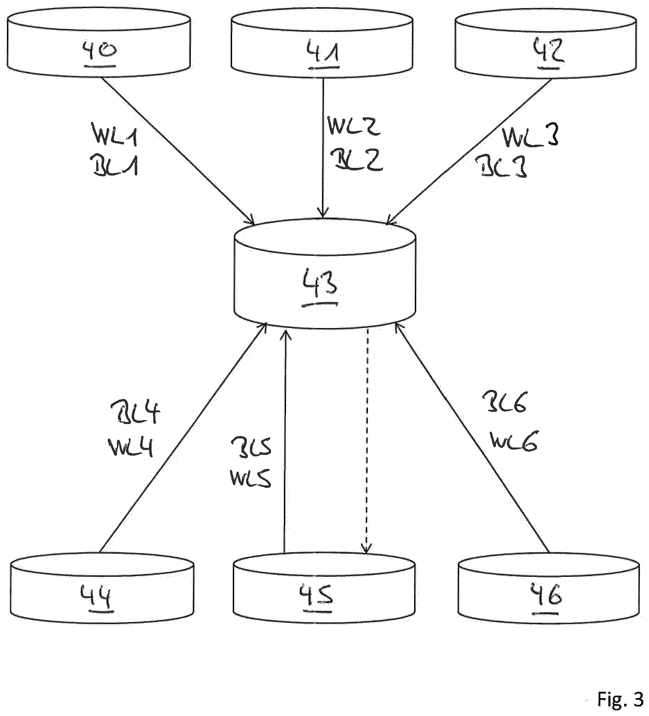

Wie bereits ausgeführt, werden ereignisgesteuert, nämlich dann, wenn die Frequenz des Inselstromnetzes 10 und/oder die Spannung des Inselstromnetzes 10 außerhalb definierter Grenzen liegt, die ersten Betriebsparameter 25 für das Inselstromnetz 10 in Block 20 bestimmt, um auf Basis dieser ersten Betriebsparameter 25 das Inselstromnetz 10 netzstabil zu betreiben, sodass demnach die Frequenz und die Spannung desselben innerhalb der definierten Grenzen liegen. Dabei werden die ersten Betriebsparameter 25 in Block 20 unter Gewährleistung eines Ausgleichs zwischen einer angeforderten elektrischen Leistung im Inselstromnetz 10 und einer zur Verfügung stehenden elektrischen Leistung im Inselstromnetz 10 unter Priorisierung der Energieerzeugungsanlagen 11, 12, 13 und der Energiespeicher 14 ermittelt. Dies erfolgt vorzugsweise wie nachfolgend unter Bezugnahme auf Fig. 3 beschrieben.

So verdeutlicht in Fig. 3 ein Block 40 eine von einem ersten Energieverbraucher 15 angeforderte elektrische Leistung, die einerseits einen Wirkleistungsanteil WL1 und andererseits einen Blindleistungsanteil BL1 aufweist. Ein Block 41 visualisiert eine von einem zweiten Energieverbraucher angeforderte zweite elektrische Leistung, die ebenfalls einen Wirkleistungsanteil WL2 und einen Blindleistungsanteil BL2 umfasst. Ein Block 42 visualisiert eine gegebenenfalls benötigte Leistungsreserve des Inselstromnetzes 10, die ebenfalls durch einen Wirkleistungsanteil WL3 und Blindleistungsanteil BL3 gekennzeichnet ist.

Diese Leistungsanforderungen 40, 41 und 42 summieren sich zu einer Gesamtleistungsanforderung 43 an das elektrische Inselstromnetz.

In Block 20 wird diese Gesamtleistungsanforderung 43 an das Inselstromnetz 10 auf die auf erneuerbaren Energieträgern beruhenden Energieerzeugungsanlagen 11, 12, auf die auf konventionellen Energieträgern beruhende Energieerzeugungsanlage 13 sowie auf die Energiespeicher 14 aufgeteilt, und zwar mit einer Priorisierung der Energieerzeugungsanlagen und der Energiespeicher, wobei die auf erneuerbaren Energieträgern beruhenden Energieerzeugungsanlagen 11, 12 mit einer höheren Priorität zur Bereitstellung der angeforderten elektrischen Gesamtleistung 43 genutzt werden als die Energiespeicher 14, und wobei die Energiespeicher 14 wiederum mit einer höheren Priorität zur Bereitstellung der angeforderten elektrischen Gesamtleistung 43 genutzt werden als auf konventionellen Energieträgern beruhende Energieerzeugungsanlagen 13.

In Fig. 3 verdeutlicht ein Block 44 das Leistungspotenzial der auf erneuerbaren Energieträgern beruhenden Energieerzeugungsanlagen 11, 12, ein Block 45 visualisiert ein Leistungspotenzial der Energiespeicher 14 und ein Block 46 visualisiert ein Leistungspotenzial der auf konventionellen Energieträgern beruhenden Energieerzeugungsanlagen 13, wobei diese Leistungspotenziale wiederum durch Wirkleistungen WL4, WL5 und WL6 sowie Blindleistungen BL4, BL5 und BL6 gekennzeichnet sind.

In Block 20 werden zunächst die Leistungspotenziale der auf erneuerbaren Energieträgern beruhenden Energieerzeugungsanlagen 11, 12, dann Leistungspotenziale der Energiespeicher 14 und falls erforderlich Leistungspotenziale der auf konventionellen Energieträgern beruhenden Energieerzeugungsanlagen 13 zur Bereitstellung des Wirkleistungsanteils der angeforderten Gesamtleistung 43, die sich aus den Wirkleistungsanteilen WL1, WL2 und WL3 zusammensetzt, genutzt, wobei dies dann zu einer von den Energieerzeugungsanlagen 11, 12, 13 und den Energiespeichern 14 bereitgestellten Blindleistung führt.

Dann, wenn die so bereitgestellte Blindleistung vom Blindleistungsanteil der angeforderten elektrischen Leistung, der sich aus dem Blindleistungsanteilen BL1, BL2 und BL3 zusammensetzt, um mehr als einen Grenzwert abweicht, wird die von den Energieerzeugungsanlagen 11, 12, 13 und dem Energiespeicher 14 bereitgestellte Blindleistung über eine Veränderung des Betriebs mindestens eines Energiespeichers 14 angepasst, nämlich derart, dass die von den Energieerzeugungsanlagen 11, 12, 13 und dem oder jedem Energiespeicher 14 bereitgestellte Blindleistung vom Blindleistungsanteil der von den Verbrauchern 15, 16 angeforderten elektrischen Gesamtleistung 43 nicht um mehr als den Grenzwert abweicht, wodurch dann sichergestellt wird, dass ein netzstabiler Betrieb vorliegt, dass also die Frequenz des Inselstromnetzes 10 und die Spannung desselben innerhalb der definierten Grenzen liegen.

In einem konkreten Beispiel sei davon ausgegangen, dass von dem ersten Energieverbraucher 15 eine elektrische Leistung 40 mit einem Wirkleistungsanteil von 25 kW und einem Blindleistungsanteil von 15 kVar angefordert wird. Von dem zweiten Energieverbraucher 16 wird eine Leistung 41 mit einem Wirkleistungsanteil von 35 kW und einem Blindleistungsanteil von 5 kVar angefordert. Im konkreten Beispiel wird keine Leistungsreserve 42 benötigt, sodass demnach der Wirkleistungsanteil der angeforderten Gesamtleistung 43 bei 60 kW und der Blindleistungsanteil bei 20 kVar liegt.

Von den auf erneuerbaren Energien beruhenden Energieerzeugungsanlagen 11, 12 kann ein Leistungspotenzial von 15 kW Wirkleistung und 5 kVar Blindleistung bereitgestellt werden. Von dem elektrischen Energiespeicher 15 kann ein Wirkleistungsanteil von 15 kW bereitgestellt werden, und zwar mit einem Blindleistungsanteil von 5 kVar. Vom elektrischen Energiespeicher 14 kann ein Wirkleistungsanteil von 30 kW bereitgestellt werden, und zwar mit einem Blindleistungsanteil von 10 kVar.

Unter Nutzung des Wirkleistungsanteils von 15 kW von den Energieerzeugungsanlagen 11, 12, die auf erneuerbaren Energieträgern beruhen, sowie des Wirkleistungsanteils von 30 kW des elektrischen Energiespeichers 14 werden demnach von der Energieerzeugungsanlage 13, die auf konventionellen Energieträgern beruht, noch 15 kW Wirkleistungsanteil benötigt, um den angeforderten Wirkleistungsanteil von 60 kW bereitzustellen.

Im konkreten Ausführungsbeispiel sei davon ausgegangen, dass die auf konventionellen Energieträgern beruhende Energieerzeugungsanlage 13 zur Bereitstellung von 15 kW Wirkleistung eine Blindleistung von 7 kVar bereitstellt. Die Summe der bereitgestellten Blindleistungen liegt dann bei 22 kVar, also oberhalb des Blindleistungsbedarfs von 20 kVar der angeforderten Gesamtleistung 43. Um dies auszugleichen, wird dann der Betrieb des elektrischen Energiespeichers 14 so angepasst, dass derselbe lediglich 8 kVar Blindleistung bereitstellt, um so dann den netzstabilen Betrieb des Inselstromnetzes 10 zu gewährleisten.

Die obige Ermittlung der ersten Betriebsbedingungen 25, also des Aufteilens der angeforderten elektrischen Gesamtleistung 43 auf die auf erneuerbaren Energieträgern beruhenden Energieerzeugungsanlagen 11, 12, auf die elektrischen Energiespeicher 14 und auf die auf konventionellen Energieträger beruhenden Energieerzeugungsanlagen 13, erfolgt heuristisch, und zwar unter Gewährleistung des Ausgleichs zwischen der angeforderten elektrischen Leistung und der zur Verfügung stehenden elektrischen Leistung unter Priorisierung der Energieerzeugungsanlagen 11, 12, 13 und Energiespeicher 14. Diese Ermittlung der ersten Betriebsparameter 25 kann innerhalb kürzester Zeit echtzeitschnell erfolgen.

Die Ermittlung der zweiten Betriebsparameter 30 in Block 27 für den kostenoptimalen Betrieb des Inselstromnetzes 10 erfolgt, wie bereits ausgeführt, durch Optimierung einer Kostenfunktion.

Bei dieser Optimierung werden auf erneuerbaren Energieträgern beruhende Energieerzeugungsanlagen 11, 12 immer maximal zur Bereitstellung der angeforderten elektrischen Leistung genutzt und bei der Kostenfunktion bleiben die Kosten der auf erneuerbaren Energieträgern beruhenden Energieerzeugungsanlagen 11, 12 demnach unberücksichtigt. In die Kostenfunktion fließen demnach, da auf erneuerbaren Energieträgern beruhende Energieerzeugungsanlagen 11, 12 mit höchster Priorität immer maximal genutzt werden, lediglich Kostenanteile für auf konventionellen Energieträgern beruhende Energieerzeugungsanlagen 13 und für elektrische Energiespeicher 14 ein.

Bei auf konventionellen Energieträgern beruhenden Energieerzeugungsanlagen 13 werden als Kosten insbesondere die Kosten fossiler Brennstoffe, Emissionskosten sowie Wartungs- und sonstige Betriebskosten berücksichtigt. Bei Energiespeichern 14 werden als Kosten insbesondere Lebensdauerzykluskosten der Energiespeicher 14 berücksichtigt, die auf einer Verringerung der Lebensdauer infolge von Ladeprozessen und Entladeprozessen des Energiespeichers 14 beruhen.

Formelmäßige Zusammenhänge für Kostenfunktionen sind dem hier angesprochenen Fachmann geläufig und zum Beispiel aus der EP 3 028 358 B1 bekannt. Es obliegt dem hier angesprochenen Fachmann, eine geeignete Kostenfunktion zur Optimierung zu nutzen.

Die Optimierung der Kostenfunktion stellt dabei ein lineares Optimierungsproblem dar, wobei bei Lösung des linearen Optimierungsproblems ein absolutes Minimum und nicht lediglich ein lokales Minimum der Kostenfunktion gesucht wird. Dies kann einige Minuten, in Anspruch nehmen. Während der zur Lösung des linearen Optimierungsproblems benötigten Berechnungszeit können sich die Betriebsbedingungen im Inselstromnetz 10 derart ändern, dass die bei der Lösung des linearen Optimierungsproblems auf Basis der alten Betriebsbedingungen ermittelten zweiten Betriebsparameter 30 keinen netzstabilen Betrieb des Inselstromnetzes 10 mehr gewährleisten.

Daher erfolgt, wie oben bereits ausgeführt, in Block 29 eine Überprüfung, ob auf Grundlage der in Block 27 bestimmten zweiten Betriebsparameter 30 nach wie vor ein netzstabiler Betrieb des Inselstromnetzes möglich ist, ob also Frequenz und Spannung des Inselstromnetzes 10 innerhalb der definierten Grenzen liegen. Nur dann, wenn dies der Fall ist, werden die zweiten Betriebsparameter 30 dem Steuergerät 26 zum Betrieb des Inselstromnetzes 10 übergeben.

Das erfindungsgemäße Verfahren schlägt demnach eine ereignisgesteuerte Bestimmung der ersten Betriebsparameter 25 und eine zeitgesteuerte Bestimmung der zweiten Betriebsparameter 30 für den Betrieb des Inselstromnetzes 10 vor. Die ersten Betriebsparameter 25 dienen der Bereitstellung eines netzstabilen Betriebs des Inselstromnetzes 10, wobei dieselben dann ermittelt werden, wenn das Inselstromnetz 10 den netzstabilen Betrieb verlässt. Innerhalb Echtzeit können die ersten Betriebsparameter 25 so bestimmt werden, dass dieselben einen netzstabilen Betrieb des Inselstromnetzes 10 gewährleisten, und zwar, wie oben ausgeführt, unter Nutzung heuristischer Methoden unter Ausgleich zwischen der angeforderten elektrischen Leistung und der zur Verfügung stehenden elektrischen Leistung unter Priorisierung der Energieerzeugungsanlagen 11, 12, 13 und Energiespeicher 14. Hierbei werden keine betriebswirtschaftlichen Faktoren berücksichtigt. Nur dann, wenn das Inselstromnetz 10 netzstabil arbeitet und demnach Frequenz und Spannung innerhalb der definierten Grenzen liegen, erfolgt zeitgesteuert, nämlich immer nach Ablauf der definierten Zeitspanne, die Bestimmung der zweiten Betriebsparameter 30 zum kostenoptimalen Betrieb des Inselstromnetzes 10, wobei hierbei betriebswirtschaftliche Faktoren mit einbezogen werden. Nach Ermittlung der zweiten Betriebsparameter 30 erfolgt die Verifikation 29, ob mit denselben noch ein netzstabiler Betrieb des Inselstromnetzes 10 möglich ist.

### Bezugszeichenliste

- 10: Inselstromnetz
- 11: Energieerzeugungsanlage
- 12: Energieerzeugungsanlage
- 13: Energieerzeugungsanlage
- 14: Energiespeicher
- 15: Energieverbraucher
- 16: Energieverbraucher

- 20: Ermittlung erster Betriebsparameter
- 21: Überprüfung netzstabiler Betrieb
- 22: Eingangsgröße
- 23: Eingangsgröße
- 24: Eingangsgröße
- 25: erste Betriebsparameter
- 26: Steuereinheit
- 27: Ermittlung zweiter Betriebsparameter
- 28: Zeitsteuerung
- 29: Überprüfung netzstabiler Betrieb
- 30: zweite Betriebsparameter
- 31: Zeitverzögerung

- 40: Leistungsanforderung
- 41: Leistungsanforderung
- 42: Leistungsreserve
- 43: Gesamtleistungsanforderung
- 44: Leistungspotenzial
- 45: Leistungspotenzial
- 46: Leistungspotenzial

## Patentansprüche

1. Verfahren zum Betreiben eines elektrischen Inselstromnetzes (10),
wobei das Inselstromnetz (10) mindestens eine auf erneuerbaren Energieträgern beruhende Energieerzeugungsanlage (11, 12), mindestens eine auf konventionellen Energieträgern beruhende Energieerzeugungsanlage (13), mindestens einen Energiespeicher (14) und mindestens einen Energieverbraucher (15, 16) aufweist,
wobei ereignisgesteuert, nämlich dann, wenn eine Frequenz des Inselstromnetzes (10) und/oder eine Spannung des Inselstromnetzes (10) außenhalb definierter Grenzen liegt, erste Betriebsparameter (25) für das Inselstromnetz (10) derart bestimmt werden, dass die Frequenz des Inselstromnetzes (10) und die Spannung des Inselstromnetzes (10) innerhalb der definierten Grenzen liegen,
dann, wenn die Frequenz des Inselstromnetzes (10) und die Spannung des Inselstromnetzes (10) innerhalb der definierten Grenzen liegen, zeitgesteuert, nämlich nach Ablauf einer definierten Zeitspanne, die in einem Block 28 überwacht wird, zweite Betriebsparameter (30) für das Inselstromnetz (10) derart bestimmt werden, dass dasselbe kostenoptimal betrieben wird,
nach Bestimmung der zweiten Betriebsparameter (30) für den kostenoptimalen Betrieb des Inselstromnetzes (10) überprüft wird, ob diese zweiten Betriebsparameter (30) gewährleisten, dass die Frequenz des Inselstromnetzes (10) und die Spannung des Inselstromnetzes (10) nach wie vor innerhalb der definierter Grenzen liegen, wobei dann, wenn dies der Fall ist, die zweiten Betriebsparameter (30) zum Betrieb des Inselstromnetzes (10) verwendet werden, wobei dann hingegen, wenn dies nicht der Fall ist, die zweiten Betriebsparameter (30) nicht zum Betrieb des Inselstromnetzes (10) verwendet werden, **wobei die zweiten Betriebsparameter (30) nach Neubestimmung erster Betriebsparameter erst nach Ablauf einer definierten Wartezeit ermittelt** werden, so dass die Zeitsteuerung des Blocks 28 unterdrückt wird solange die Zeitverzögerung des Blocks 31 noch aktiv ist.

2. Verfahren nach Anspruch 1, **dadurch gekennzeichnet, dass** die ersten Betriebsparameter (25) unter Gewährleistung eines Ausgleichs zwischen einer angeforderten elektrischen Leistung und einer zur Verfügung stehenden elektrischen Leistung unter Priorisierung der Energieerzeugungsanlagen (11, 12, 13) und Energiespeicher (14) ermittelt werden.

3. Verfahren nach Anspruch 2, **dadurch gekennzeichnet, dass**
die mindestens eine auf erneuerbaren Energieträgern beruhende Energieerzeugungsanlage (11, 12) mit einer höheren Priorität zur Bereitstellung der angeforderten elektrischen Leistung genutzt wird als der mindestens eine Energiespeicher (14),
der mindestens eine Energiespeicher (14) mit einer höheren Priorität zur Bereitstellung der angeforderten elektrischen Leistung genutzt wird als die mindestens eine auf konventionellen Energieträgern beruhende Energieerzeugungsanlage (13).

4. Verfahren nach Anspruch 2 oder 3, **dadurch gekennzeichnet, dass**
die angeforderte elektrische Leistung einen Wirkleistungsanteil und einen Blindleistungsanteil umfasst,
zunächst Leistungspotentiale der mindestens einen auf erneuerbaren Energieträgern beruhenden Energieerzeugungsanlage (11, 12), dann Leistungspotentiale des mindestens einen Energiespeichers (14) und falls erforderlich Leistungspotentiale der mindestens einen auf konventionellen Energieträgern beruhenden Energieerzeugungsanlage (13) zur Bereitstellung des Wirkleistungsanteils der angeforderten elektrischen Leistung genutzt werden,
dann, wenn die abhängig hiervon bereitgestellte Blindleistung vom Blindleistungsanteil der angeforderten elektrischen Leistung um mehr als einen Grenzwert abweicht, die bereitgestellte Blindleistung über Veränderung des Betriebs des mindestens einen Energiespeichers (14) so angepasst wird, dass die bereitgestellte Blindleistung vom Blindleistungsanteil der angeforderten elektrischen Leistung nicht um mehr als den Grenzwert abweicht.

5. Verfahren nach einem der Ansprüche 1 bis 4, **dadurch gekennzeichnet, dass**
die ersten Betriebsparameter (25) heuristisch ermittelt werden.

6. Verfahren nach einem der Ansprüche 1 bis 5, **dadurch gekennzeichnet, dass**
die zweiten Betriebsparameter (30) durch Optimierung einer Kostenfunktion ermittelt werden.

7. Verfahren nach Anspruch 6, **dadurch gekennzeichnet, dass**
bei der Optimierung die mindestens eine auf erneuerbaren Energieträgern beruhende Energieerzeugungsanlage (11, 12) immer maximal zur Bereitstellung der angeforderten elektrischen Leistung genutzt wird und bei der Kostenfunktion die Kosten der mindestens einen auf erneuerbaren Energieträgern beruhenden Energieerzeugungsanlage (11, 12) unberücksichtigt bleiben.

## Claims

1. A method for operating an electrical off-grid power network (10),
wherein the off-grid power network (10) comprises at least one energy generation plant (11, 12) based on renewable energy sources, at least one energy generation plant (13) based on conventional energy sources, at least one energy store (14) and at least one energy consumer (15, 16),
wherein event-controlled, namely, in particular when a frequency of the off-grid power network (10) and/or a voltage of the off-grid power network (10) is outside defined limits, first operating parameters (25) for the off-grid power network (10) are determined in such a manner that the frequency of the off-grid power network (10) and the voltage of the off-grid power network (10) are within the defined limits,
in particular when the frequency of the off-grid power network (10) and the voltage of the off-grid power network (10) are within the defined limits, second operating parameters (30) for the off-grid power network (10) are determined in a time-controlled manner, namely, after the expiration of a defined period of time, which is monitored in a block (28), in such a manner that the same is cost-optimally operated,
after the determination of the second operating parameters (30) for the cost-optimal operation of the off-grid power network (10) it is checked whether these second operating parameters (30) ensure that the frequency of the off-grid power network (10) and the voltage of the off-grid power network (10) are still within the defined limits, wherein in particular when this is the case, the second operating parameters (30) for operating the off-grid power network (10) are used, wherein by contrast when this is not the case, the second operating parameters (30) are not used for operating the off-grid power network (10),
wherein after re-determination of first operating parameters the second operating parameters (30) are determined only after expiration of a defined waiting period so that the time control of the block (28) is suppressed for as long as the time delay of the block (31) is still active.

2. The method according to Claim 1, **characterised in that** the first operating parameters (25) are determined subject to ensuring a balance between a requested electrical power and an available electrical power subject to prioritisation of the energy generation plants (11, 12, 13) and energy stores (14).

3. The method according to Claim 2, **characterised in that** the at least one energy generation plant (11, 12) based on renewable energy sources is utilised with a higher priority for providing the requested electrical power than the at least one energy store (14), the at least one energy store (14) is utilised with a higher priority for providing the requested electrical power than the at least one energy generation plant (13) based on conventional energy sources.

4. The method according to Claim 2 or 3, **characterised in that** the requested electrical power comprises an active power portion and a reactive power portion, initially power potentials of the at least one energy generation plant (11, 12) based on renewable energy sources, then power potentials of the at least one energy store (14) and if required, power potentials of the at least one energy generation plant (13) based on conventional energy sources are utilised for providing the active power portion of the requested electrical power, in particular when the reactive power provided dependent thereon deviates from the reactive power portion of the requested electrical power by more than a limit value, the provided reactive power is adjusted by changing the operation of the at least one energy store (14) in such a manner that the provided reactive power deviates from the reactive power portion of the requested electrical power by not more than the limit value.

5. The method according to any one of the Claims 1 to 4, **characterised in that** the first operating parameters (25) are determined heuristically.

6. The method according to any one of the Claims 1 to 5, **characterised in that** the second operating parameters (30) are determined by optimising a cost function.

7. The method according to Claim 6, **characterised in that** during the optimisation, the at least one energy generation plant (11, 12) based on renewable energy sources is always maximally utilised for providing the requested electrical power and in the cost function, the costs of the at least one energy generation plant (11, 12) based on renewable energy sources are disregarded.

## Revendications

1. Procédé d'exploitation d'un réseau électrique isolé (10),
dans lequel le réseau électrique isolé (10) comporte au moins une installation de production d'énergie (11, 12) à partir de sources d'énergie renouvelables, au moins une installation de production d'énergie (13) à partir de sources d'énergie conventionnelles, au moins un dispositif de stockage d'énergie (14) et au moins un consommateur d'énergie (15, 16),
dans lequel, de manière contrôlée par événement, à savoir lorsque une fréquence et/ou une tension du réseau électrique isolé (10) se situent en dehors des limites définies, des premiers paramètres de fonctionnement (25) du réseau électrique isolé (10) sont déterminés de telle sorte que la fréquence du réseau électrique isolé (10) et la tension du réseau électrique isolé (10) se situent dans les limites définies,
puis, lorsque la fréquence du réseau électrique isolé (10) et la tension du réseau électrique isolé (10) se situent dans les limites définies, de manière contrôlée dans le temps, à savoir après l'écoulement d'une période de temps définie, qui est surveillée dans un bloc (28), des deuxièmes paramètres de fonctionnement (30) du réseau électrique isolé (10) sont déterminés de telle sorte que le réseau électrique isolé (10) soit exploité de manière optimale en termes de coûts,
après détermination des deuxièmes paramètres de fonctionnement (30) pour l'exploitation optimale du réseau électrique isolé (10), on vérifie si ces deuxièmes paramètres de fonctionnement (30) garantissent que la fréquence et la tension du réseau électrique isolé (10) restent toujours dans les limites définies, dans lequel, si tel est le cas, les deuxièmes paramètres de fonctionnement (30)sont utilisés pour l'exploitation du réseau électrique isolé (10), dans lequel, dans le cas contraire, les deuxièmes paramètres de fonctionnement (30) ne sont pas utilisés pour l'exploitation du réseau électrique isolé (10), dans lequel les deuxièmes paramètres de fonctionnement (30)sont déterminés après la nouvelle détermination des premiers paramètres de fonctionnement seulement après l'écoulement d'un temps d'attente défini, de sorte que la commande temporelle du bloc (28) soit désactivée tant que la temporisation du bloc (31) est active.

2. Procédé selon la revendication 1, **caractérisé en ce que** les premiers paramètres de fonctionnement (25) sont déterminés en assurant un équilibre entre une puissance électrique demandée et une puissance électrique disponible, en priorisant les installations de production d'énergie (11, 12, 13) et les dispositifs de stockage d'énergie (14).

3. Procédé selon la revendication 2, **caractérisé en ce que** la au moins une installation de production d'énergie (11, 12) à partir de sources d'énergie renouvelables est utilisée prioritairement pour fournir la puissance électrique demandée par rapport à au moins un dispositif de stockage d'énergie (14), le au moins un dispositif de stockage d'énergie (14) avec la priorité plus haute pour fournir la puissance électriquement demandée est utilisé par rapport à au moins une installation de production d'énergie (13) à partir de sources d'énergie conventionnelles.

4. Procédé selon la revendication 2 ou 3, **caractérisé en ce que** la puissance électrique demandée comprend une composante active et une composante réactive, on utilise d'abord les potentiels de puissance d'au moins une installation de production d'énergie (11, 12) à partir de sources d'énergie renouvelables, puis les potentiels de puissance d'au moins un dispositif de stockage d'énergie (14) et, si nécessaire, les potentiels de puissance d'au moins une installation de production d'énergie (13) à partir de sources d'énergie conventionnelles pour fournir la composante active de la puissance électrique demandée, si la puissance réactive fournie en fonction de cette fonction s'écarte de la composante réactive de la puissance électrique demandée de plus d'une valeur limite, la puissance réactive fournie est adaptée en modifiant le fonctionnement d'au moins un dispositif de stockage d'énergie (14) de sorte que la puissance réactive fournie ne s'écarte pas de la composante réactive de la puissance électrique demandée de plus de la valeur limite.

5. Procédé selon une des revendications 1 à 4, **caractérisé en ce que** les premiers paramètres de fonctionnement (25) sont déterminés de manière heuristique.

6. Procédé selon une des revendications 1 à 5, **caractérisé en ce que** les deuxièmes paramètres de fonctionnement (30) sont déterminés par optimisation d'une fonction de coût.

7. Procédé selon la revendication 6, **caractérisé en ce que** lors de l'optimisation, la au moins une installation de production d'énergie (11, 12) à partir de source d'énergie renouvelables est toujours utilisées au maximum pour fournir la puissance électrique demandée et les coûts d'au moins une installation de production d'énergie (11, 12) à partir de sources d'énergie renouvelables sont négligés dans la fonction de coût.
